# EUROPEAN PATENT APPLICATION

(11) **EP 1 933 235 A2**
(43) Date of publication of application: **18.06.2008**
(21) Application number: 07301626.3
(22) Date of filing: 04.12.2007
(51) Int. Cl.: G06F 9/50

(54) **Grid modeling tool**

(30) Priority: 13.12.2006 US 610377
(71) Applicant: FRANCE TELECOM, 75015 Issy-les-Moulineaux (FR)
(72) Inventor: Garg, Sukesh, SAN JOSE, CA 95135 (US); Sidhom, Gabriel, MILL VALLEY, CA 94941 (US); Mullan, Pramila, LOS GATOS, CA 95032 (US)

(57) **Abstract**

A device to generate an optimized workflow for a plurality of processes to be executed in a grid infrastructure, the device comprising an input module to receive information for each process said information comprising the dependencies between the plurality of processes, a dependency module to regroup the processes in sequences of processes that can be executed parallel to each others, and a workflow generator to generate optimized workflow comprising the sequences placed in parallel to each others,

## Description

### FIELD OF THE PRESENT SYSTEM:

The present device relates in general to tools to manage jobs and processes on a grid infrastructure and more specifically to a tool to measure the increase in efficiency resulting from the move of IT systems towards a grid infrastructure.

### BACKGROUND OF THE PRESENT SYSTEM:

Grid computing harnesses a diverse array of networked machines and resources to perform higher throughput computing. A virtual computer architecture is created wherein process execution can be distributed and rapidly processed. Academic and government researchers have used grid computing for several years to solve large-scale problems, and the private sector is increasingly adopting the technology to create innovative products and services, reduce time to market, and enhance business processes. Grids are usually heterogeneous networks. Grid nodes, generally individual computers, consist of different hardware and use a variety of operating systems.

Grid computing has become a critical component of science, business, and industry. Grids lead to advances in fields ranging from industrial design to systems biology and financial management. Grids allow the analysis of huge investment portfolios in minutes instead of hours, to significantly accelerate drug development, and reduce design times and defects. With computing cycles plentiful and inexpensive, practical grid computing would open the door to new models for compute utilities, a service similar to an electric utility in which a user buys computing time on-demand from a provider.

However, there is no clear generic solution for marketing grid computing to enterprises or consumers. No solution exist to allow the sales team to determine the increase in efficiency or operational expenditures (OPEX) savings by moving IT (information technology) systems to a grid infrastructure. In addition, the technical teams cannot quantify the expected improvements by moving towards a grid infrastructure.

In "Management of Grid Jobs and Information within SAMGrid", by A. Baranovski and al. presented at CHEP 2003 and incorporated here by reference, a workflow of jobs or processes is created but no optimization of the job sequence is achieved.

Today there is a need for a method and a tool to determine an optimized workflow and quantify the gain in efficiency and OPEX from moving IT systems to grid infrastructure.

### SUMMARY OF THE PRESENT SYSTEM:

It is an object of the present device and method to overcome disadvantages of and/or improve the known prior art.

The present system includes a method and device for generating an optimized workflow of jobs that can be carried out on a grid infrastructure.

Accordingly, in grid computing, the present system relates to a method for determining an optimized workflow for a plurality of jobs, the method comprising the steps of:
- receiving information for each job, said information comprising the dependencies between the plurality of jobs;
- resolving the dependencies by regrouping the jobs in sequences of jobs that can be performed in parallel to each others;
- generating an optimized workflow of jobs, said optimized workflow comprising the sequences placed in parallel to each others.

The method according to the present system will allow the sales team to determine the increase in efficiency or the OPEX savings by moving IT systems to a grid infrastructure. Indeed the generated workflow comprises sequences of processes that can be distributed over a computer network to optimize the time required to perform all processes, leading to a gain both in efficiency and OPEX.

In a further embodiment of the method according to the present system, the step of resolving the dependencies further comprises the steps of:
b1) selecting a job among the plurality of jobs as the current job
b2) finding the dependencies to the current job,
b3) appending one of said dependencies to said current job when at least one dependency is found,
b4) selecting the appended dependency as the new current job.

In a further embodiment of the method according to the present system, step b1) further comprises the step of identifying a first job that is not a dependent job to any other jobs, and selected said first job as the current job.

In an accordance with a further embodiment of the present system, the step b3) further comprises the step of storing the other found dependencies in order to generate a separate sequence from the current job when more than one dependency is found.

In an additional embodiment of the method according to the present system, for each of the stored dependencies to a current job, the method further comprises the steps of:
b5) appending said stored dependency to said current job,
b6) selecting the appended stored dependency as the new current job, and,
b7) repeating steps b2) to b4) as long as further dependencies can be found in step b2), the current and appended job forming a further sequence with the first job as the final job.

In an additional embodiment of the method according to the present system, the method further comprises the steps of:
- identifying an additional job that is not a dependent job to any other jobs, and provided such an additional job can be identified:

- selecting said additional job as the current job,
- repeating steps b2) to b7) to generate sequences with said additional job as the final job,
- identifying further additional jobs and provided such additional jobs can be identified, generating sequences with said further additional jobs as the final job.

In accordance with a further embodiment of the present system, the step of generating an optimized workflow further comprises the steps of:
- determining for each sequence the duration of said sequence,
- evaluating the duration of the plurality of jobs as the longest sequence duration.

The present system also relates to a device to generate an optimized workflow for a plurality of jobs, the device comprising:
- an input job engine to receive information for each job said information comprising the dependencies between the plurality of jobs,
- a dependency engine to regroup the jobs in sequences of jobs that can be performed parallel to each others,
- a workflow generator to generate optimized workflow comprising the sequences placed in parallel to each others.

In accordance with an additional embodiment of the present system, the dependency module comprises a processor configured to:
- select a job among the plurality of jobs as the current job
- find the dependencies to the current job,
- append one of said dependencies to said current job when at least one dependency is found,
- select the appended dependency as the new current job.

In accordance with another embodiment of the present system, the processor is further configured to identify a first job that is not a dependent job to any other jobs, and select said first job as the current job.

In accordance with an additional embodiment of the present system, the processor is further configured to store the other found dependencies in order to generate a separate sequence from the current job when more than one dependency is found.

In accordance with an additional embodiment of the present system, the processor is further configured to further construct a sequence, the further constructing of a sequence comprising:
- select a job among the plurality of jobs as the current job
- find the dependencies to the current job,
- append one of said dependencies to said current job when at least one dependency is found,
as long as further dependencies can be found, the current and appended jobs forming a sequence with the first job as the final job.

In accordance with another embodiment of the present system, the processor is further configured for each of the stored dependencies to a current job, to:
- append the stored dependency to the current job,
- select the appended stored dependency as the new current job, and,
- further constructing a sequence.

Such a device or modeling tool generates the optimized workflow that allows to determine the gains in duration, OPEX, ... a user can gain from moving to a grid infrastructure. embodiment,.

Thanks to the modeling tool according to the present system, a useful tool for marketing grids to enterprises or consumers is achieved. The tool will allow the sales team to determine the increase in efficiency or the OPEX savings by moving IT systems to a grid infrastructure.

In addition, the technical teams will be able to quantify the expected improvements by moving towards a grid infrastructure and effect the change in the grid middleware.

The present system also relates to a computer program product to be stored in a device to generate an optimized workflow, said computer program product comprising instructions to:
- receiving information for each job, said information comprising the dependencies between the plurality of jobs;
- resolving the dependencies by regrouping the jobs in sequences of jobs that can be performed in parallel to each others;
- generating an optimized workflow of jobs, said optimized workflow comprising the sequences placed in parallel to each others, when executed by a processor of said device.

### BRIEF DESCRIPTION OF THE DRAWINGS:

The present device is explained in further detail, and by way of example, with reference to the accompanying drawings wherein:
FIG. 1 illustrates one embodiment of the method to generate an optimized workflow of jobs for grid computing according to the present system; and,
FIG. 2 illustrates a schematic of one embodiment of the tool to generate an optimized workflow of jobs for grid computing according to the present system.
FIG. 3 shows another device in accordance with an embodiment of the present device.

### DETAILED DESCRIPTION OF THE EMBODIMENTS:

The following are descriptions of illustrative embodiments that when taken in conjunction with the drawings will demonstrate the above noted features and advantages, as well as further ones. In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims. Moreover, for the purpose of clarity, detailed descriptions of well-known devices, circuits, and methods are omitted so as not to obscure the description of the present device. In addition, it should be expressly understood that the drawings are included for illustrative purposes and do not represent the scope of the present device.

Furthermore, in the hereafter description, job or process will be used equally to refer to the list of tasks to be performed on a grid infrastructure.

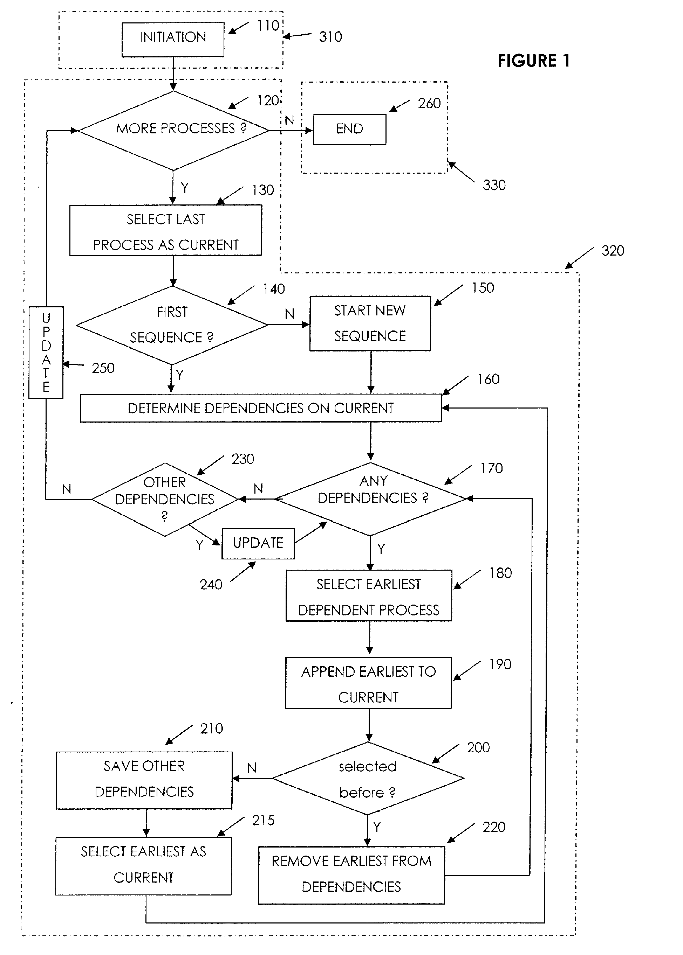

In accordance with the method according to the present system, different steps may be carried out as illustrated in FIG. 1 to generate an optimized workflow of processes as well as the resulting gains in OPEX and efficiency among data of interest.

The method according to the present system for generating an optimized workflow from a plurality of jobs - or list of jobs - in grid computing comprises the steps of:
- receiving information for each job, said information comprising the dependencies between the plurality of jobs;
- resolving the dependencies by regrouping the jobs in sequences of jobs that can be performed in parallel to each others;
- generating an optimized workflow of jobs, said optimized workflow comprising the sequences placed in parallel to each others.

To move an IT system to a grid infrastructure, information about the different processes is needed. This information may comprise for each process the cost to perform said process, in terms of time, money or any other variable that may be required. This information further comprises the order in which the processes are to be executed and the dependencies a process is attached to.

By the dependencies (or dependent jobs) of one process, one may understand any job that must be performed before said process as said process may need the output from the dependent jobs to be executed. The dependency of a job B may be A if B requires the output data from A to be executed, i.e. some of the output from A is taken as an input to B.

For example, with a series of 6 processes or jobs A, B, C, D, E and Z, with the dependencies:
- A must be executed before C,
- C must be performed before E
- B must be executed before D, and
- B must be executed before Z, and Z before D.

The dependency of E is C, while the dependency of C is A. The dependencies of D are B and Z, while the dependency of Z is B. In the hereafter description, the dependency will also be represented using an arrow "→" to mark the dependency of a first job Z1 with a second job Z2, Z1 being a dependency to Z2, and represented by the sequence Z1 → Z2.

Two types of dependencies may be identified, the process dependencies and the priority dependencies. The process dependencies are the dependencies illustrated here before. The priority dependencies are related to two jobs that may be performed simultaneously, the first one starting prior to the second for some reasons. The second one is said to have a priority dependency to the first one. The method according to the present system deals with the first type of dependencies.

A sequence of jobs is defined as a list of jobs that must be executed after one another, i.e. in a serial mode, as each job requires the previous job to be carried out first before it can be executed. Furthermore, each defined sequence is independent from the other sequences, and may be carried out in parallel mode to the other sequences. All sequences as defined in this context can be distributed over different machines or resources to fully benefit from a grid infrastructure.

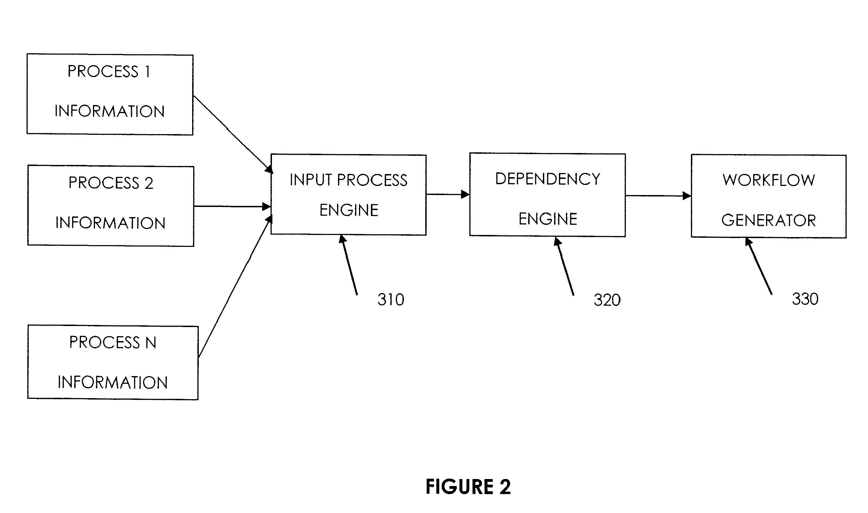

Two independent sequences are defined when a job Z1 needs two different and independent jobs Z2 and Z3 to be performed before it starts. In the here above example, 3 independent sequences are defined: A → C → E, B → D, and B → Z → D. Different sequences may show common jobs that will need to be run several times for each sequence. In other words, sequences may have common portions. The different steps of the method according to the present system, that comprise an iterative phase, will be described here after. The method according to the present system may be ran by the device according to the present system and represented in FIG. 2.

In a first step 110 of the method according to the present system, the information is received for each job. In other words, an initiation step is carried out. The list of jobs is provided, with the related dependencies and their respective durations. Other variables such as related cost to perform for example may be provided at this point. In this step, the jobs are stored in a pool of non selected jobs that will be emptied progressively as each job is reviewed. This pool may be e.g. an array NON_SELECT_POOL with the job information attached to it, or stored elsewhere. A pool of selected jobs SELEC_POOL is initiated to zero and will be later on filled with the reviewed jobs, and their related dependencies, in the form of independent sequences. SELEC_POOL may also be an array or any relevant storage datum.

In an alternative embodiment of the method according to the present system, the list of jobs may be ordered sequentially based on their duration, cost, rank of execution, or any relevant datum that allows to classify the jobs between themselves. The jobs that are not a dependency to any other jobs, like jobs D and E in the here above example, may be placed last in NON_SELECT_POOL. These jobs correspond to the last job of a given sequence.

In steps 120 to 250 described here after, the dependencies are resolved.

In a second step 120 of the method according to the present system, the processes present and/or left in the non selected pool are reviewed. If more processes are left, the method is carried on to a third step 130, while the method is stopped (step 260) when no processes are left in said non selected pool.

In the third step 130 of the method according to the present system, the last process in NON_SELECT_POOL is selected, and defined as the current job called here after CURRENT. A job is thus selected among the list of jobs.

The here after steps 140 to 240 correspond to an iterative phase carried out for each current job CURRENT selected from NON_SELECT_POOL. This iterative phase is performed by the dependency engine which will be described later on. Steps 140 to 240 allow to build all sequences ending with the last process selected in NON_SELECT_POOL. Are concerned all the sequences ending with said last process which bear a least a common portion with another sequence ending with said same last process.

In a further step of the method according to the present system, a new sequence is generated. The device check in a step 140 whether the new sequence is the first one stored in SELECT_POOL or not. If this is the first sequence to be stored, meaning that CURRENT is the first job to be selected from NON_SELECT_POOL, CURRENT is placed directly into SELECT_POOL in step 140. If other sequences have been stored before in SELECT_POOL, the device starts in an additional step 150 a new sequence by placing CURRENT in SELECT_POOL in parallel to the existing sequences. This happens when another job is selected from NON_SELECT_POOL, i.e. when all possible sequences that end with the job previously selected from NON_SELECT_POOL have been constructed in steps 160 to 240.

The construction of the sequence, or sequence under review, can be carried on with the following subsequent steps.

Whether this is a first sequence or not, the method carries on in an further step 160 with determining the dependencies of the CURRENT job. To that effect, all the remaining jobs of NON_SELECT_POOL and their dependency with CURRENT are reviewed. The dependencies are determined based on the information provided in step 110. The relevant jobs are placed in a buffer pool called here after BUFFER_POOL. If no dependency is found, BUFFER_POOL is left empty. The content of BUFFER_POOL is function of the current job, and will also be referred to here after as BUFFER_POOL(CURRENT).

In this step, only the jobs with a direct dependency with CURRENT are selected. The jobs that are characterized with no direct dependency with CURRENT, but only a dependency with those with a direct dependency with CURRENT are not selected. In the chosen example, C, but not A, would be selected for E. B and Z would be both selected for D, because both of them have a direct dependency with D, even though B also has a dependency with Z.

In a further step 170 of the method according to the present system, the content of BUFFER_POOL is reviewed. If any dependency is found, i.e. BUFFER_POOL is not empty, one of the jobs of BUFFER_POOL, called here after DEPENDENT, is selected in a subsequent step 180. In an embodiment, the earliest dependent process, i.e. the process that requires the earliest start due for example to its duration, is selected in said step 180.

In an additional step 190 of the method according to the present system, DEPENDENT is appended to CURRENT. This may be achieved e.g. through attaching a pointer to DEPENDENT that points to CURRENT. Thanks to this step, the sequence under review is further constructed.

In a further step 200 of the method according to the present system, the device checks if DEPENDENT has been selected before, i.e., if DEPENDENT belongs to SELECT_POOL. In the affirmative, i.e. the output of DEPENDENT is necessary for different subsequent jobs, or DEPENDENT is a common dependency to different jobs, a further step 220 is carried out. In the negative, i.e. DEPENDENT is the dependency to only one job, another step 210 is carried out.

In this step 210, as the link between CURRENT and DEPENDENT has been established, DEPENDENT is removed from BUFFER_POOL. Furthermore, both the current job CURRENT and its attached BUFFER_POOL (with DEPENDENT removed nonetheless) and are pushed in a stack called here after STACK.

STACK is a LIFO structure, i.e. with the "last in first out" approach. The current job and the jobs of the BUFFER_POOL are entered into STACK. As illustrated later, STACK is used to store the other found dependencies (along with the current job) that are dependent upon the current job, in the event more than dependencies have been found in step 160. This information is stored up until the sequence under review is completed, and will then be uploaded from STACK (popped out) in steps 230 and 240 - as described later - to further generate other (separate) sequences that have a common path (common portions) with the present sequence under review (at least the final job). In the previous example wherein both B and Z are dependent upon D with B dependent with Z, STACK is used to construct the second sequence originating from D (B → Z → D) after the first sequence B → D is constructed.

Furthermore, in step 215 consequent to step 210, the value of the current job CURRENT is updated to the dependent job DEPENDENT. This step will allow to further construct the sequence under review.

After STACK has received information (step 210) and the current job has been updated (step 215), step 160 is carried again to determine the dependencies of the new current job CURRENT. If no dependency is found, BUFFER_POOL is kept to its former value. If dependencies exist for CURRENT, BUFFER_POOL is emptied and received the found dependencies for CURRENT. The steps 180 to 215 can be carried out as long as dependencies in step 160 are found for the updated current job. Each time other dependencies are found for the current job, STACK receives in step 210 the current job CURRENT with the content of BUFFER_POOL least DEPENDENT. Other dependencies that are still to be reviewed later on are stored in STACK in a LIFO approach and will be taken out one after the other (last in first out) in step 240 as explained here after.

When the sequence under review does not have any more dependent job, i.e. in step 170 no dependency to CURRENT is found, in an additional step 230, the device checks if other dependencies were stored in STACK for a later review. The last job entered in STACK is "popped out", i.e. retrieved from STACK with its attached BUFFER_POOL(last job entered). In a subsequent step 240, the current job and the buffer pool are updated, as this last job becomes the current job CURRENT and its attached BUFFER_POOL the actual BUFFER_POOL under review. The steps 170 to 220 can be resumed to further construct another sequence. If dependencies are retrieved, i.e. the popped out BUFFER_POOL is not nil as evaluated in step 170, steps 180 to 220 may be carried out. If the dependent job DEPENDENT selected in step 180 has been selected before, i.e. that it belongs to SELECT_POOL as evaluated in step 200, a different step 220 is carried out wherein DEPENDENT is removed from BUFFER_POOL. DEPENDENT is removed from the content of BUFFER_POOL and step 170 is carried out again to check for further jobs in what is left of BUFFER_POOL. As DEPENDENT has been reviewed for a previous sequence, STACK does not need to be updated.

This loop is carried on up until no more dependent jobs can be found in BUFFER_POOL in step 170 and no more jobs can be popped out of STACK in step 230. In such a case, both the content of SELECT_POOL and NON_SELECT_POOL are updated in a subsequent step 250. The resulting sequences constructed during the preceding steps are stored in SELECT_POOL for the jobs that have not been stored in SELECT_POOL before, like in step 160 (i.e. after step 140, 150 or 215). Furthermore, all selected job corresponding to the different built sequences since step 140 are removed from NON_SELECT_POOL Thus only the jobs related to a "completely independent" sequence, i.e. with no common portion with any of the sequences analyzed before, can be further reviewed.

Once the update step 250 has been carried out, the device according to the present system restarts with step 120 wherein NON_SELECT_POOL is reviewed for any jobs left corresponding to these completely independent sequences. In an embodiment of the method according to the present system, step 120 may be carried out with an additional job that is not a dependent job to any other jobs left in NON_SELECT_POOL, i.e. a job that will be the last job of a further generated sequence.

Step 120 and the subsequent sequence construction will be repeated as long as similar additional job may be found in what is left of NON_SELECT_POOL (which content is reduced each time step 250 is performed).

When no more jobs can be found in NON_SELECT_POOL, step 260 is carried out to evaluate the different gains from using a grid infrastructure to run the different reviewed processes. SELECT_POOL with the different constructed sequences comprises the optimized workflow, as each sequence may be performed on a separate resource or machine in a grid infrastructure.

Using the example presented before, the method according to the present system will be carried out as follows:

In the initiation step 110, the information related to the jobs A, B, C, D, E and Z is collected, including the dependency information. These jobs are stored in NON_SELECT_POOL As E and D are not the dependency to any other jobs, they are placed last in NON_SELECT_POOL. As NON_SELECT_POOL is not empty (step 120), CURRENT = E in step 130. This is the first sequence (step 140) to be analyzed. In step 160, E is placed in SELECT_POOL, and the dependencies to E are determined and placed in BUFFER_POOL. Here BUFFER_POOL(E)=C. As BUFFER_POOL(C) is not nil (step 170), DEPENDENT = C in step 180, which is appended to E in step 190. At this stage, only E is present in SELECT_POOL. As C does not belong to SELECT_POOL (step 200), C is removed from BUFFER_POOL which is left empty, and both E and BUFFER_POOL are stored in STACK (hence E is saved in STACK with an empty BUFFER_POOL). DEPDENDENT becomes the current job CURRENT in step 215, and the method according to the present system is resumed at step 160 with CURRENT = C. The same steps 160 to 215 are repeated with CURRENT = C and BUFFER_POOL (C) = A. STACK is updated with C and an empty BUFFER_POOL, with C the last job in.

In the next stage, as CURRENT = A, no dependency is found in step 160, and step 170 leads to step 230 in which the content of STACK is reviewed. As STACK is not empty, in step 240, C is popped out (last in) with its saved BUFFER_POOL (nil). With this empty BUFFER_POOL, step 170 leads to step 230 again wherein E is popped out of STACK with another empty BUFFER_POOL. The sequence of steps 170 and 230 is repeated, and as no more jobs can be popped out of STACK, in a further step 250, the constructed sequences are saved in SELECT_POOL. As E, C and A were saved before in SELECT_POOL, SELECT_POOL is not updated at this point, and these 3 jobs are removed from NON_SELECT_POOL.

As more processes can be found in NON_SELECT_POOL (step 120), job D is saved as the current job CURRENT in step 130. As a new (completely separate) sequence is under construction (ending with D), D is placed next to the sequence A → C → E in SELECT_POOL in step 150. In step 160, B and Z are placed in BUFFER_POOL(D). As BUFFER_POOL is not nil (step 170), B is selected as the DEPENDENT job in step 180, as the earliest dependent process. Nonetheless, any another choice (here Z) would also lead to the same final result as the output of the method according to the present system, i.e. the workflow is independent of the choice of DEPENDENT at this stage.

B is appended to D in step 190, and as B as not been selected before (step 200), B is removed from BUFFER_POOL(D) in step 210. D and the updated BUFFER_POOL(D), i.e. Z, are placed in STACK for a later use. B is selected as CURRENT in step 215. Step 160 may resume with the new CURRENT value. CURRENT = B is placed in SELECT_POOL, which now comprises A, C, E and B and the dependencies of B are determined. As BUFFER_POOL(B) is empty, step 170 leads to step 230 wherein, as STACK is not empty, D is popped out along its BUFFER_POOL containing Z in step 240. As BUFFER_POOL(D) is not empty in step 170, Z is selected as DEPENDENT is step 180, and Z is appended to D in the subsequent step 190. Z does not belong to SELECT_POOL as checked in step 200, and Z is removed from BUFFER_POOL(D) in the same step. D is stored in STACK with its empty BUFFER_POOL, and Z becomes the new current job CURRENT.

Step 160 to 200 can be resumed with CURRENT = Z. Z is placed in SELECT_POOL. As BUFFER_POOL(Z)=B, B is selected as DEPENDENT (step 180) and appended to Z (step 190). In step 200, as B has been selected before (B belongs to SELECT_POOL), step 220 is carried out. B is removed from BUFFER_POOL(Z), and the method according to the present system carries on with step 170. BUFFER_POOL(Z) is now empty. Step 170 leads to step 230. As STACK is not empty, D is popped out of STACK in step 240 with an empty BUFFER_POOL. The sequence 170-230-250 is repeated (BUFFER_POOL(D) and STACK both empty). SELECT_POOL does not need to be updated as all jobs have already been added. Furthermore, B, Z, and D are removed from NON_SELECT_POOL. which is left empty. Step 120 leads to step 260 wherein the optimized workflow is generated from SELECT_POOL. The workflow comprises the independent sequence A → C → E and the two separate sequences B → D, and B → Z → D, with the jobs B and D in common.

Knowing the duration of each job, the duration of the optimized workflow using a grid infrastructure would correspond to the longest of the 3 sequences, each sequence duration corresponding to the sum of the durations of all the jobs comprises therein.

The architecture of the device or tool according to the present system comprises of three components, as seen in FIG. 2. This tool first comprises an Input Process Engine or module 310. This engine captures the different processes (Zi, i=1 to N, with N an integer ≥ 1) information. This information may include the cost to perform each said process, in terms of time, money or any other variable that may be required. This input engine corresponds to the steps 110 in FIG. 1.

The tool according to the present system further comprises a Dependency Engine or module 320. This engine resolves the dependencies between the different processes and determines which processes may occur in parallel and which have to occur in serial mode. The steps 140 to 250 from the here above described method are implemented in this module.

The tool according to the present system further comprises a Workflow Generator 330. This generator takes into account the input from the different processes (costs, time, ...), the dependencies between the difference processes as stored in SELECT_POOL, and delivers a workflow which describes the improvement in the efficiency of the processes by moving to a grid infrastructure and will also calibrate the performance improvements. This workflow can then be fed into the grid middleware infrastructure to put the improvement into effect. Step 260 in FIG. 1 is performed by this workflow generator 330.

As the various processes are inputted into the device according to the present system along with their dependencies at the inter-process and intra-process level and the time taken to complete each individual process, the tool may indeed determine the optimized time to run all processes by adding for each constructed sequence the time required for each of its job components. The longest time among all sequences is the optimized time determined thanks to the device according to the present system.

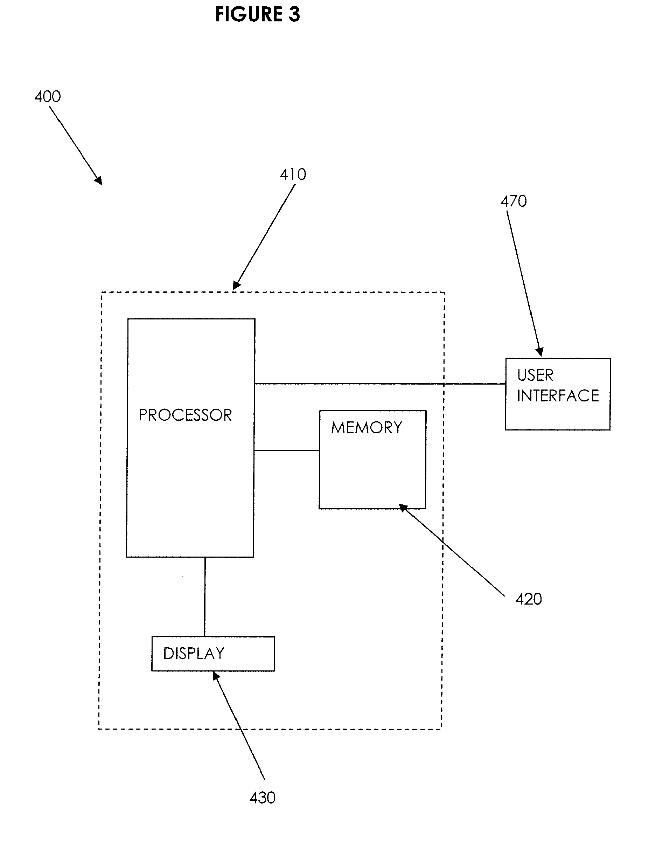

The method according to the present system is particularly suited to be carried out by a computer software program, such program containing modules corresponding to one or more of the individual steps or acts described and/or envisioned by the present device. Such program may of course be embodied in a computer-readable medium, such as an integrated chip, a peripheral device or memory 420, or other memory coupled to a processor 410 as illustrated in FIG. 3. The 3 modules described in FIG. 2 may be actually be carried out by the same processor 410 configured to implement the method according to the present system, or 2 or more different processors dedicated to the steps of the method identified previously for each module 310, 320 and 330. Processor 410 may comprise a portion configured to implement step 110, another portion configured to implement steps 120 to 250 and an additional portion configured to carry out step 260. In an alternative embodiment of the device according to the present system, the dependency engine 320 may comprise a processor configured to carry out the steps 120 to 250.

The computer-readable medium and/or memory 420 may be any recordable medium (e.g., RAM, ROM, removable memory, CD-ROM, hard drive, DVD, floppy disks and/or memory cards) or may be a transmission medium (e.g., a network comprising fiber-optics, the world-wide web, cables, or a wireless channel using time-division multiple access, code-division multiple access, and/or other radio-frequency channel). Any medium known or developed, or combination thereof, that can store and/or transmit information suitable for use with a computer system may be used as the computer-readable medium and/or memory 420.

Additional memories may also be used. The computer-readable medium, the memory 420, and/or any other memories may be long-term, short-term, or a combination of long-term and short-term memories. These memories configure processor 410 to implement the method, operational acts, and functions disclosed herein. The memories may be distributed, for example between the clients and/or servers, or local and the processor 410, where additional processors may be provided, may also be distributed or may be singular. The memories may be implemented as electrical, magnetic or optical memory, or any combination of these or other types of storage devices. Moreover, the term "memory" should be construed broadly enough to encompass any information able to be read from or written to an address in an addressable space accessed by a processor. With this definition, information accessible through a network is still within memory 420, for instance, because the processor 410 may retrieve the information from the network for operation in accordance with the present device.

The processor 410 is capable of providing control signals and/or performing operations in response to input information from a user interface 470 as well as in response to other devices of a network and executing instructions stored in the memory 420. The processor 410 may be an application-specific or general-use integrated circuit(s). Further, the processor 410 may be a dedicated processor for performing in accordance with the present device or may be a general-purpose processor wherein only one of many functions operates for performing in accordance with the present device. The processor 410 may operate utilizing a program portion, multiple program segments, or may be a hardware device utilizing a dedicated or multi-purpose integrated circuit. The workflow generator 330 may use display 430 to display the optimized workflow.

Clearly the processor 410, memory 420, display 430 and/or user interface 470 may all or partly be a portion of a computer system or other device such as a client and/or server as described above.

Finally, the above-discussion is intended to be merely illustrative of the present device and method, and should not be construed as limiting the appended claims to any particular embodiment or group of embodiments. Thus, while the present device and method have been described in particular detail with reference to specific exemplary embodiments thereof, it should also be appreciated that numerous modifications and alternative embodiments may be devised by those having ordinary skill in the art without departing from the broader and intended spirit and scope of the present device and method as set forth in the claims that follow. In addition, the section headings included herein are intended to facilitate a review but are not intended to limit the scope of the present device and method. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts or steps is intended to be required unless specifically indicated.

## Claims

1. In grid computing, a method for determining an optimized workflow for a plurality of processes to be executed on a grid infrastructure, the method comprising the steps of:
- receiving information for each process, said information comprising the dependencies between the plurality of processes;
- resolving the dependencies by regrouping the processes in sequences of processes that can be executed in parallel to each others;
- generating an optimized workflow of processes, said optimized workflow comprising the sequences placed in parallel to each others.

2. The method of claim 1, wherein resolving the dependencies further comprises the steps of:
b1) selecting a process among the plurality of processes as the current process
b2) finding the dependencies to the current process,
b3) appending one of said dependencies to said current process when at least one dependency is found,
b4) selecting the appended dependency as the new current process.

3. The method of Claim 2, wherein in step b1) further comprises the step of identifying a first process that is not a dependent process to any other processes, and selecting said first process as the current process.

4. The method of claim 3, wherein the step b3) further comprises the step of:
b3a) storing the other found dependencies in order to generate a separate sequence from the current process when more than one dependency is found

5. The method of claim 4, wherein the step of resolving the dependencies further comprises the step of:
- repeating steps b2) to b4) as long as further dependencies can be found in step b2), the current and appended processes forming a sequence with the first process as the final process.

6. The method of claim 5 further comprising for each of the stored dependencies to a current process, the steps of:
b5) appending said stored dependency to said current process,
b6) selecting the appended stored dependency as the new current process, and,
b7) repeating steps b2) to b4) as long as further dependencies can be found in step b2), the current and appended process forming a further sequence with the first process as the final process.

7. The method of claim 6, further comprising the step of:
- identifying an additional process that is not a dependent process to any other processes, and provided such an additional process can be identified:
- selecting said additional process as the current process,
- repeating steps b2) to b7) to generate sequences with said additional process as the final process,
- identifying further additional processes and provided such additional processes can be identified, generating sequences with said further additional processes as the final process.

8. The method of claim 7, wherein the step of generating an optimized workflow further comprises the steps of:
- determining for each sequence the duration of said sequence,
- evaluating the duration of the plurality of processes as the longest sequence duration.

9. A device to generate an optimized workflow for a plurality of processes to be executed in a grid infrastructure, the device comprising:
- an input module to receive information for each process said information comprising the dependencies between the plurality of processes,
- a dependency module to regroup the processes in sequences of processes that can be executed parallel to each others,
- a workflow generator to generate optimized workflow comprising the sequences placed in parallel to each others.

10. The device of claim 9, wherein the dependency module comprises a processor configured to:
- select a process among the plurality of processes as the current process
- find the dependencies to the current process,
- append one of said dependencies to said current process when at least one dependency is found,
- select the appended dependency as the new current process.

11. The device of Claim 10, wherein the processor is further configured to identify a first process that is not a dependent process to any other processes, and select said first process as the current process.

12. The device of claim 11, wherein the processor is further configured to store the other found dependencies in order to generate a separate sequence from the current process when more than one dependency is found

13. The device of claim 12, wherein the processor is further configured to further construct a sequence, the further constructing of a sequence comprising:
- select a process among the plurality of processes as the current process
- find the dependencies to the current process,
- append one of said dependencies to said current process when at least one dependency is found,
as long as further dependencies can be found, the current and appended processes forming a sequence with the first process as the final process.

14. The device of claim 13, the processor being further configured for each of the stored dependencies to a current process, to:
- append the stored dependency to the current process,
- select the appended stored dependency as the new current process, and,
- further constructing a sequence.

15. A computer program product to be stored in a device to generate an optimized workflow, said computer program product comprising instructions to:
- receiving information for each process, said information comprising the dependencies between the plurality of processes;
- resolving the dependencies by regrouping the processes in sequences of processes that can be executed in parallel to each others;
- generating an optimized workflow of processes, said optimized workflow comprising the sequences placed in parallel to each others, when executed by a processor of said device.
